# EUROPEAN PATENT APPLICATION

(11) **EP 1 193 419 A1**
(43) Date of publication of application: **03.04.2002**
(21) Application number: 00308058.7
(22) Date of filing: 15.09.2000
(51) Int. Cl.: F16G 11/12, F16B 7/06, B65H 69/06, F16G 11/00

(54) **Splicing nut for securing a line**

(71) Applicant: Brennan, Stephen, Sunnyvale, CA 94086 (US)
(72) Inventor: Brennan, Stephen, Sunnyvale, CA 94086 (US)
(74) Representative: Gill, David Alan

(57) **Abstract**

The invention provides for a splicing nut for securing a line or rope enables quick, lightweight, secure attachment of the line or rope end to itself so as to form a loop wherein the loop can be used to attach to another line or an object without the use of a knot or other attachment means or device. The arrangement comprises a nut having an end and an aperture extending inwardly from the said end, said aperture extending to define an inner surface, and a threaded region being provided on the inner surface of the said aperture and a core arranged to be threaded into said nut by means of a threaded region provided on an outer surface of the core, and the core having a plurality of slots provided in the outer surface thereof and arranged for receiving a line.

## Description

This invention relates to a splicing nut that can be used to secure a variety of braided ropes and lines etc.,

Various types of line, such as a common braided rope, provide a useful means of securing and controlling the distance or exerted force between two points in a variety of contexts. For example, lines are used to constrain and actuate control mechanisms on boats. Effective use of such lines normally requires a method of attaching one or both ends of the line to another object such as an eye, hook, shackle, or another line.

Current methods of attachment include several means of securing the end of the line to the line for the purpose of forming a loop. The loop is used to attach to an external object. Such means of attaching the end of the line to the line include many kinds of knots and splices. Knots are bulky and heavy and are inclined to catch or jam on surrounding objects. Splices can be difficult and costly to make, time consuming, and difficult to remove.

A need exists for a reusable attachment device than can enable quick, inexpensive, and secure attachments for lines.

A splicing nut according to the present invention comprises a nut having a threaded hole and a core, the core having threads on its exterior for threading into the nut, the core also having slots into which a line can be placed before the core is threaded into the nut, such that the line is secured in the splicing nut when the core is tightened into the nut.

This invention also includes a method whereby a line is secured by a splicing nut by placing the line into slots in a core, the core having threads on its exterior, and threading the core into a nut, the nut having threads on its interior.

The invention is described further hereinafter, by way of example only, with reference to the accompanying drawings in which:

Figure 1 illustrates a splicing nut according to the present invention.

Figure 2 shows an elevation view of the embodiment of the nut shown in Figure 1.

Figure 3 shows a plan view of the nut which corresponds to the elevation view of Figure 2.

Figure 4 shows a plan view of the nut as viewed from above the nut shown in Figure 2.

Figure 5 shows a section view of the embodiment of the nut shown in Figure 1 as referenced by line 1-1 in Figure 4.

Figure 6 shows a partial view of the nut threads as referenced by Figure 5.

Figure 7 shows a plan view of the core of the embodiment shown in Figure 1.

Figure 8 shows an elevation view of the core that is orthogonal to Figure 7.

Figure 9 shows an elevation view of the core that is orthogonal to Figure 7.

Figure 10 shows a section view of the core as referenced by line 2-2 of Figure 7.

Figure 11 shows a detail view of the slot in the core as referenced by Figure 7.

Figure 12 shows a section view of the core as referenced by line 3-3 of Figure 7.

Figure 13 shows a detail view of the threads of the core as referenced by Figure 10.

Figure 14 shows a detail view of the core as referenced by Figure 12.

Figure 15 shows a perspective view of the core shown in Figure 7.

Figure 16 shows an elevation view of a core of another embodiment.

Figure 17 shows a plan view of the core that corresponds to Figure 16 as viewed from above.

Figure 18 shows a plan view of the core that corresponds to Figure 16 as viewed from below.

Figure 19A shows an elevation view of the core orthogonal to Figure 16.

Figure 19B shows an arrangement of the core wherein a rope is sewn to the core with a thread.

Figure 20 is a perspective view of the core shown in Figure 16.

Figure 21 shows a partial perspective view of the core shown in Figure 16.

Figure 22 shows a perspective view of the embodiment of the splicing nut shown in Figure 1 with the core fully inserted.

Figure 23 shows a plan view that corresponds to the perspective view of Figure 22.

Figure 24 shows a section view of the splicing nut as referenced by line 4-4 of Figure 23.

Figure 25 shows a section view of the splicing nut as referenced by line 5-5 of Figure 23.

Figure 26 shows an exploded perspective view of a second embodiment of the invention which includes a nut housing, nut inserts, and a core.

Figure 27 shows an elevation view of the assembled embodiment of the splicing nut shown in Figure 26.

Figure 28 shows a plan view of the splicing nut that corresponds to Figure 27 as viewed from below.

Figure 29 shows a plan view of the splicing nut that corresponds to Figure 27 as viewed from above.

Figure 30 shows a perspective view of the assembled embodiment of the splicing nut shown in Figure 26.

Figure 31 shows another perspective view of the assembled embodiment of the splicing nut shown in Figure 26.

Figure 32 shows an exploded section view of the splicing nut as referenced by line 6-6 of Figure 28.

Figure 33 shows an exploded section view of the splicing nut as referenced by line 7-7 of Figure 29.

Figure 34 shows a perspective view of the disassembled nut inserts.

Figure 35 shows another perspective view of the disassembled nut inserts.

Figure 36 shows an elevation view of the disassembled nut inserts.

Figure 37 shows a plan view of the disassembled nut inserts that corresponds to Figure 36.

Figure 38 shows an elevation view of one nut insert.

Figure 39 shows a section view of the assembled splicing nut as referenced by line 6-6 of Figure 28.

Figure 40 shows a section view of the assembled splicing nut as referenced by line 7-7 of Figure 29.

Figure 41 shows an exploded view of the embodiment of Figure 26.

Figure 42 shows the embodiment of Figure 26 of the splicing nut with the nut inserts in the nut housing and a line in the core.

Figure 43 shows the embodiment of Figure 26 of the splicing nut with the nut inserts in the nut housing and a line in the core.

Figure 44 shows the embodiment of Figure 26 of the splicing nut with the nut inserts in the nut housing, a line in the core, and the core in the nut inserts and nut housing.

Figure 45 shows the embodiment of Figure 26 of the splicing nut with the nut inserts in the nut housing, a line in the core, and the core in the nut inserts and nut housing.

Figure 46 shows a plan view of a closed thimble.

Figure 47 shows an elevation view of the closed thimble of Figure 46.

Figure 48 shows an elevation view of the closed thimble of Figure 46.

Figure 49 shows a plan view of an open thimble.

Figure 50 shows an elevation view of the open thimble of Figure 49.

Figure 51 shows an elevation view of the open thimble of Figure 49.

Figure 52 shows a plan view of the thimble, splicing nut, and line.

Figure 53 shows an elevation view of the thimble, splicing nut, and line of Figure 52.

Figure 54 shows an elevation view of the thimble, splicing nut, and line of Figure 52.

Figure 55 shows a perspective view of wire spanners.

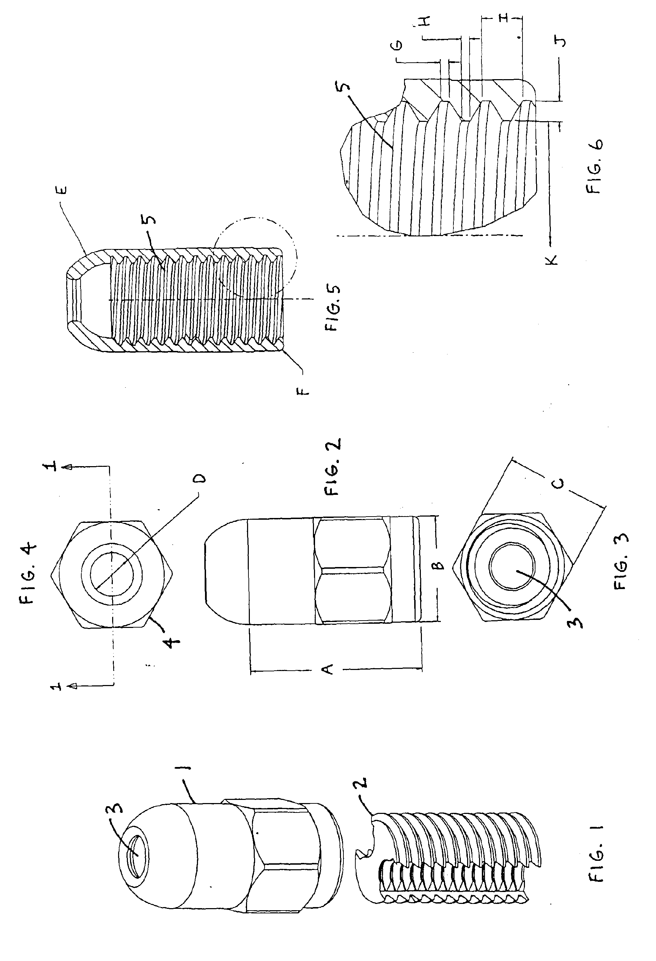

A splicing nut according to the present invention is illustrated in Figure 1. The splicing nut can be used to secure a line and especially to secure a loop of the line, thus allowing the loop and the line to be put in tension. The loop can be used to attach the line to an eye, a hook, or another object or line without the use of a knot or other attachment method or device.

In the first embodiment, the splicing nut is comprised of two parts, a nut 1 and a core 2.

The nut 1 of the first embodiment, shown in Figures 2, 3, and 4, has the general shape of a cylinder comprised of a top end, a bottom end opposite the top end, and a curved outside surface connecting the top end to the bottom end. A hole 3 extends through the nut 1 from the top end to the bottom end. The diameter of the hole 3 at the top end is large enough to allow a line to be passed through the hole 3. The diameter of the hole 3 is larger at the bottom end, allowing the core 2, described below, to be threaded into the hole 3.

In some embodiments, the generally cylindrical shape of the nut 1 is altered by smoothing the edge that connects the top end of the nut 1 and the curved outer surface. As seen in the figures, the top end and the curved outer surface comprise one continuous surface, thereby making the splicing nut less likely to become caught or entangled with other lines or objects which are in the working environment of the splicing nut.

The nut 1 also has a plurality of flat surfaces or faces 4, preferably six or eight, which comprise a shape which can be accommodated by a common wrench. The shape formed by the combination of the faces 4 can, for example, form a hexagon as seen in Figure 4.

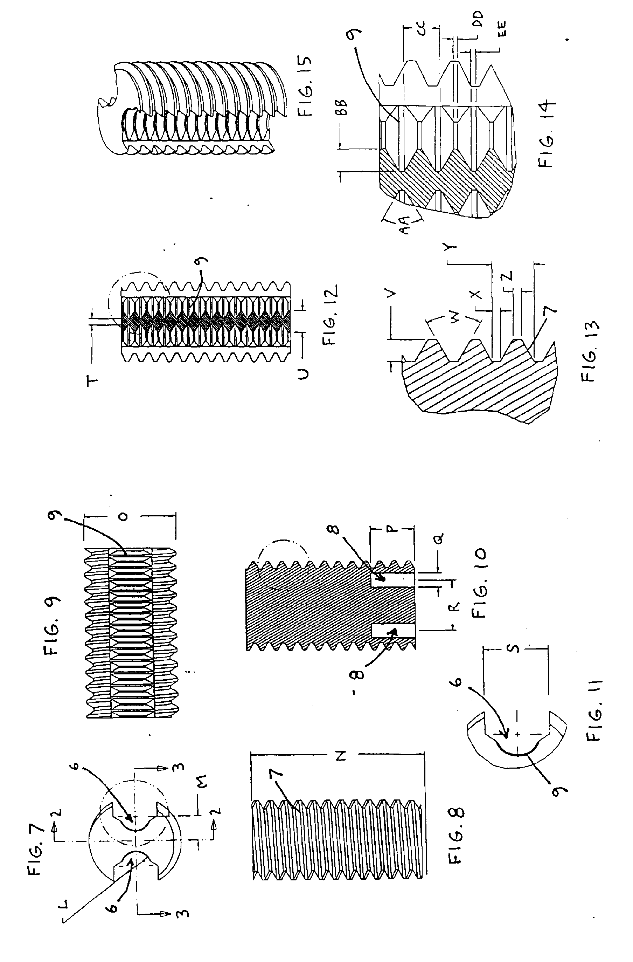

Figure 5, a section view of the nut 1 as referenced by line 1-1 of Figure 4, shows internal nut threads 5 which are used to attach to the core 2. An enlarged view of the internal nut threads 5 is shown in Figure 6.

Illustrative dimensional specifications for the nut 1 as shown in Figures 2-6 are provided in Table I below. Table I provides one possible set of dimensions for a nut 1 which can be used in a splicing nut that is used for securing a 3/8 inch diameter line. The nut 1 described by the dimensions presented in Table I can also be used for securing lines of other sizes by using a properly designed core 2.

**Table I**

| | Broad (inches) | Preferred (inches) |
|---|---|---|
| A | 1.490 - 1.510 | 1.500 |
| B | 0.910 - 0.930 | 0.920 |
| C | 0.920 - 0.940 | 0.930 |
| D | 0.365 - 0.385 | 0.375 |
| E | 0.450 - 0.470 | 0.460 |
| F | 0.040 - 0.060 | 0.050 |
| G | 0.247 - 0.253 | 0.25 |
| H | 0.247 - 0.253 | 0.25 |
| I | 0.119 - 0.125 | 0.122 |
| J | 0.060 - 0.066 | 0.063 |
| K | 0.667 - 0.673 | 0.670 |

A plan view of the core 2 is shown in Figure 7. Figures 8 and 9 show the sides of the core 2. As shown in Figure 8, the core 2 has external core threads 7 at the perimeter of the core 2 along the length of the core 2. The external core threads 7 complement the internal nut threads 5 so that the external core threads 7 secure the core 2 inside the nut 1 when the core 2 is screwed into the nut 1. An enlarged view of the external core threads 7 is shown in Figure-13, as referenced by Figure 10.

The core 2 has two slots 6 that are open to the sides of the core 2 as also shown in Figure 7. Different embodiments of the present invention may comprise any number of slots 6, and the slots 6 may have a variety of shapes. The purpose of the slots 6 is to provide regions in the core 2 where the line may be laid, such regions also allowing the line to be exposed to the inside surface of the nut 1 when the core 2 is threaded into the nut 1. Threading the core 2 into the nut 1 causes the line to be compressed between the slots 6 and the nut 1. Such compression holds the line tightly, resisting movement of the line. When a loop of the line is formed between slots 6, the loop is secured when the core 2 is threaded into the nut 1. The use of multiple slots 6 allows the line to be secured at a plurality of points. This increases the total gripping strength of the splicing nut. Additionally, a minimum of two slots 6 capable of gripping the line is necessary to secure a loop of the line and ensure that tension on the line does not tighten the loop so far that the minimum bending radius of the line is exceeded. It is recognized that an additional slot(s) 6 could be incorporated in the design of the core 2. A third slot would provide an additional region where the line could be laid and gripped between the slots 6 and the nut 1, thus providing additional holding strength.

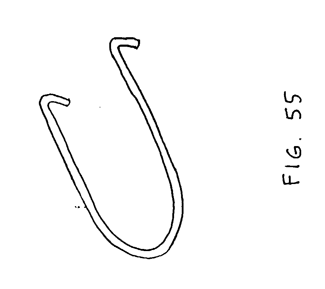

Figure 10, a section view of the core 2 as referenced by line 2-2 of Figure 7, shows two holes 8 which extend into the bottom of the core 2. The holes 8 can accommodate a gripping tool to allow a torsion force to be applied to the core 2 when it is screwed into the nut 1. For example, the core 2 can be gripped using wire spanners as shown in Figure 55.

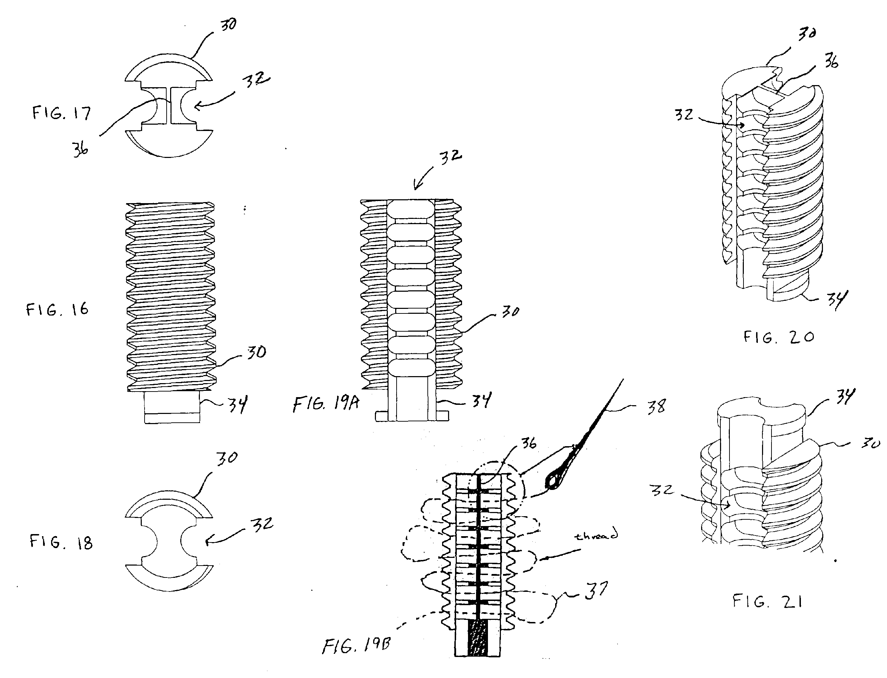

Figure 11 shows an enlarged view of one slot 6 as referenced by Figure 7. The slot 6 has ribs 9 that extend perpendicular from the sides of the slot 6. The ribs 9 cause the line to be gripped tightly by creating additional compressive force on the line when the line is passed through the slots 6 and the core 2 is threaded into the nut 1. The ribs 9 are shown in Figure 9 and Figure 12, a section view as referenced by line 3-3 of Figure 7. In the embodiment shown, the ribs 9 resemble an internal thread pattern, though the ribs 9 can be of a variety of designs, including sawtooth, gnarled, or irregularly roughened surfaces. An enlarged view of the ribs 9 is shown in Figure 14 as referenced by Figure 12. A perspective view of the core 2 is shown in Figure 15.

Illustrative dimensional specifications for the core 2 as shown in Figures 7-14 are provided in Table II below. Table II provides one possible set of dimensions for a core 2 which can be used in a splicing nut that is used for securing a 3/8 inch diameter line.

**Table II**

| | Broad (inches) | Preferred (inches) |
|---|---|---|
| L | 0.235 - 0.255 | 0.245 |
| M | 0.205 - 0.225 | 0.215 |
| N | 1.490 - 1.510 | 1.500 |
| O | 0.776 - 0.796 | 0.786 |
| P | 0.365 - 0.385 | 0.375 |
| Q | 0.115 - 0.135 | 0.125 |
| R | 0.440 - 0.460 | 0.450 |
| S | 0.365 - 0.385 | 0.375 |
| T | 0.055 - 0.035 | 0.055 |
| U | 0.185 | 0.185 |
| V | 0.058 - 0.063 | 0.063 |
| W | 60° ± 0.5° | 60.051° |
| X | 0.247 - 0.253 | 0.25 |
| Y | 0.119 - 0.125 | 0.122 |
| Z | 0.021 - 0.027 | 0.024 |
| AA | 60.0° | 60.0° |
| BB | 0.055 - 0.075 | 0.065 |
| CC | 0.093 - 0.113 | 0.103 |
| DD | 0.002 - 0.022 | 0.012 |
| EE | 0.005 - 0.025 | 0.015 |

An alternative design of the core is shown in Figures 16-21. Figure 16 is an elevation view of a core 30, which may be easier to machine and has an inner gripping surface 32 that may provide better rope-gripping capability. The core 30 shown in Figure 16 is longer than the core shown in Figures 7-14 and also has a bottom section 34 that does not have threads and is shaped to accommodate a common wrench. Figures 17 and 18 are plan views of the core 30 that correspond to Figure 16 as viewed from above and below respectively. Holes 8 may be omitted from the core 30 as shown in Figure 18. Figure 19A is an elevation view of the core 30 that is orthogonal to the view shown in Figure 16. Figure 19B shows how the inner wall 36 may be made thin enough to allow the rope to be sewn to the the core with a thread 37 that is stitched through inner wall 36 using a needle 38, producing an embodiment capable of withstanding very high stresses. Figure 20 is a perspective view of the core 30 shown in Figure 16. Figure 21 is a partial perspective view of the core 30 shown in Figure 16. Figure 21 shows the bottom section of the core 30 which is shaped to accommodate a gripping tool such as a wrench.

As is evident from Figures

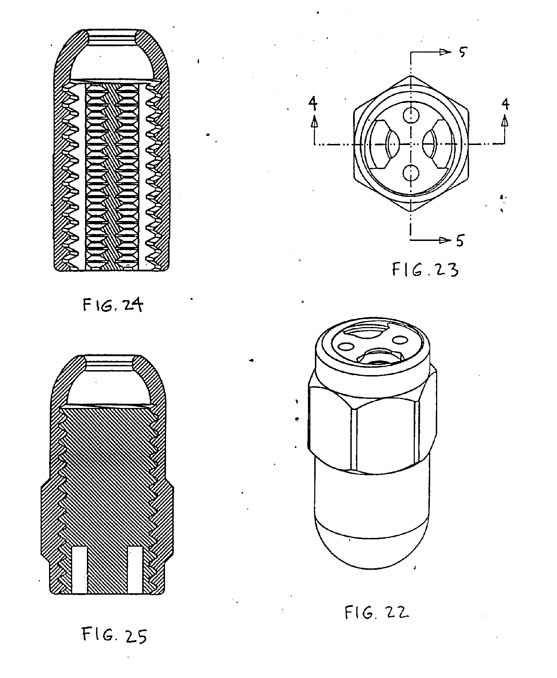

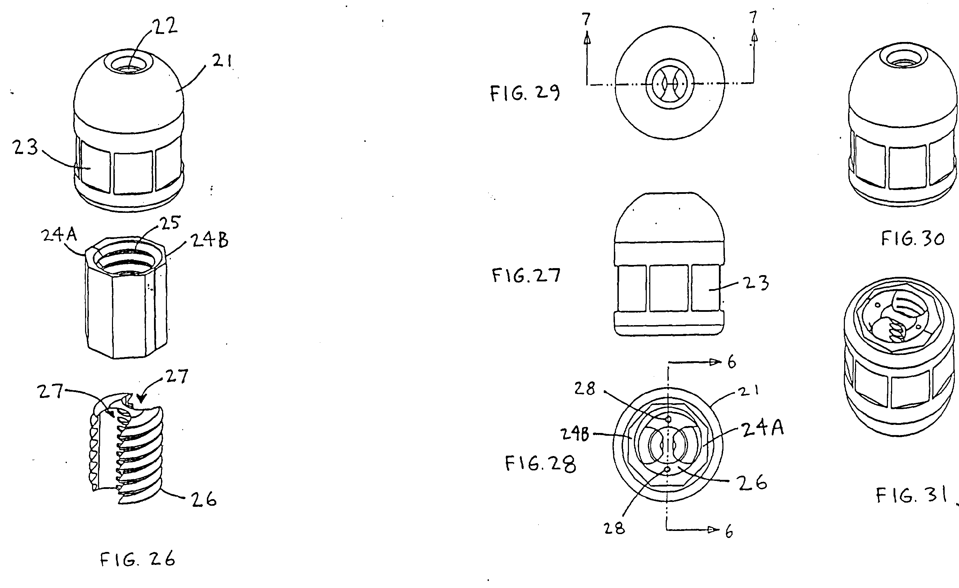

Figures 22 to 25 show the first embodiment of the present invention with the nut 1 and core 2 assembled. For clarity, a line is not shown in the figures. Figure 22 shows a perspective view of the assembled splicing nut. Figure 23 shows a plan view and lines 4-4 and 5-5 which reference section views shown in Figure 24 and Figure 25 respectively.

A second embodiment of the present invention comprises four parts as shown in Figure 26, an exploded view. A nut housing 21 is similar to the nut 1 of the first embodiment. The nut housing 21 includes a hole 22 and a plurality of gripping faces 23. The primary difference between the nut 1 and nut housing 21 is that the nut housing 21 does not have internal threads into which a core 26 may be screwed. Instead, nut inserts 24A and 24B are inserted into the nut housing 21. The nut inserts 24A and 24B are identical and fit in the shape of a common nut, such as is used to attach to a bolt. The outside shape of the nut inserts 24A and 24B match the shape of the bottom section of the hole 22 in the nut housing 21 so that the nut inserts 24a and 24B are secured in the nut housing 21 and prevented from rotating therein. The nut inserts 24A and 24B have internal threads 25 into which the core 26 screws. A preferred number of nut inserts 24A and 24B is two, as shown in the embodiment shown in Figures 20-39. Alternatively, the nut inserts 24A and 24B may comprise a single part, or a plurality of more than two nut inserts 24A and 24B may be used. The use of nut inserts 24A and 24B, especially two nut inserts 24A and 24B, simplifies the splicing nut manufacturing_process, especially if the splicing nut components are to be molded. The core 26 of the second embodiment is substantially similar to the core 26 of the first embodiment.

Figures 27-31 show the second embodiment as assembled without the line. Figure 27 is an elevation view. Figures 28 and 29 are plan views, orthogonal to Figure 27, showing the bottom and top of the splicing nut respectively. Figures 30 and 31 are perspective views of the assembled splicing nut of the second embodiment.

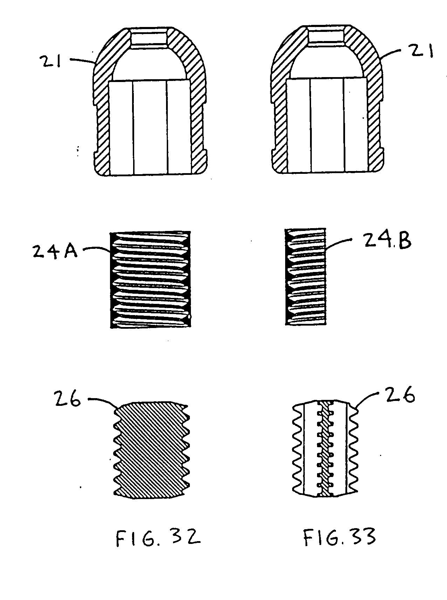

Figures 32 and 33 are exploded section views as referenced by line 6-6 of Figure 28 and line 7-7 of Figure 29 respectively. Figure 33 shows only one nut inserts 24A to clearly show the separation of the nut inserts 24A and 24B.

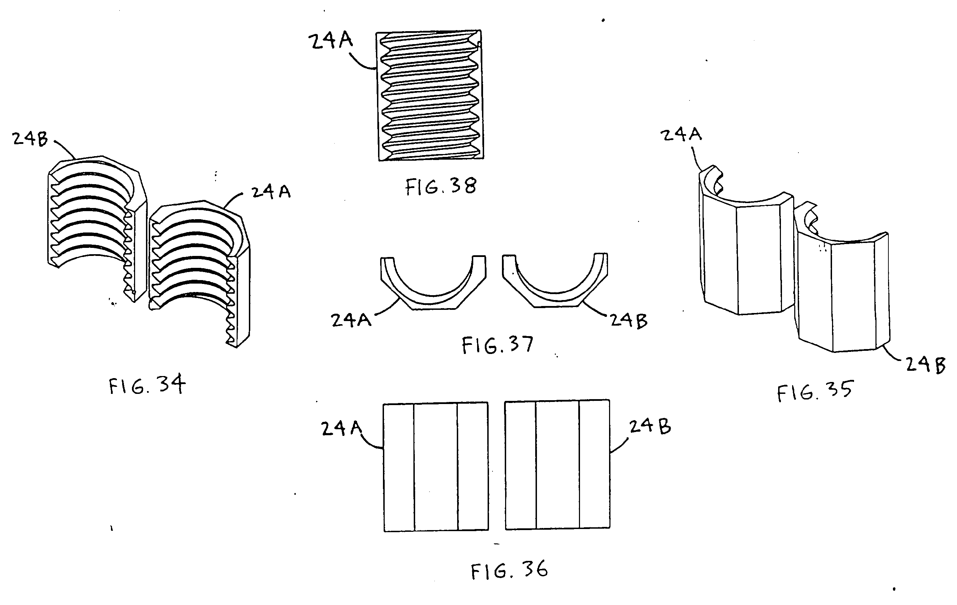

Figures 34-38 show various views of the nut inserts 24A and 24B. Figure 34 and 35 are perspective views, shown with the nut inserts 24A and 24B separated. Figure 37 is a plan view. Figures 36 and 38 are elevation views, orthogonal to Figure 37. Only one of the nut inserts 24A is shown in Figure 38.

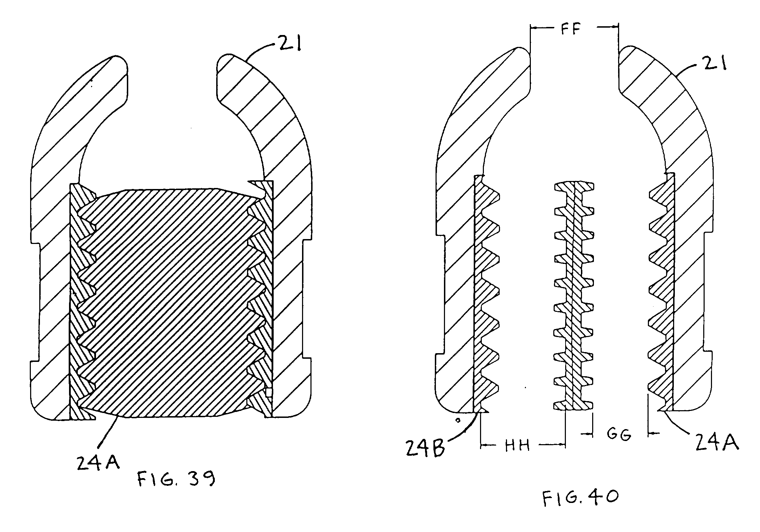

Figures 39 and 40 are section views of the assembled nut housing 21 and nut inserts 24A and 24B as referenced by line 6-6 of Figure 28 and line 7-7 of Figure 29 respectively. The core 26 is not shown.

Illustrative dimensional specifications for the nut housing 21 and nut inserts 24A and 24B as shown in Figure 40 are provided in Table III below. Table III provides one possible set of dimensions for a nut housing 21 and nut inserts 24A and 24B which can be used in a splicing nut that is used for securing a 3/8 inch diameter line.

**Table III**

| | Broad (inches) | Preferred (inches) |
|---|---|---|
| FF | 0.365 - 0.385 | 0.375 |
| GG | 0.225 - 0.245 | 0.235 |
| HH | 0.350 - 0.370 | 0.360 |

The splicing nut components may be formed from a variety of materials. These materials include, but are not limited to, plastic, metal, wood, rubber, composite materials, and a combination of such materials. The preferred method of manufacture is a molding process, and the preferred materials are those that can be molded, especially those plastics which can be molded. The chosen material should be one that offers strength, stiffness, durability, lightness of weight, resistance to water and chemicals, or a combination of some or all of these characteristics.

The splicing nut can be used to secure a variety of lines. The lines may be braided, cored or uncored, formed from synthetic or natural materials, and of any diameter, weight, and strength. Examples include common ropes and stretch cords, such as those used in boating and sailing applications. The splicing nut may be specially designed to accommodate a line of a certain type or size, or the splicing nut may accommodate a range of sizes of line and a variety of types of line.

Additionally, the splicing nut components may be designed to be interchangeable so that, for example, one nut housing 21 may be compatible with a number of different nut inserts 24A and 24B or cores 26. Thus a single nut housing 21 can be common to a number of splicing nuts, simplifying the manufacturing process and reducing the necessary stock of components necessary for securing a variety of lines.

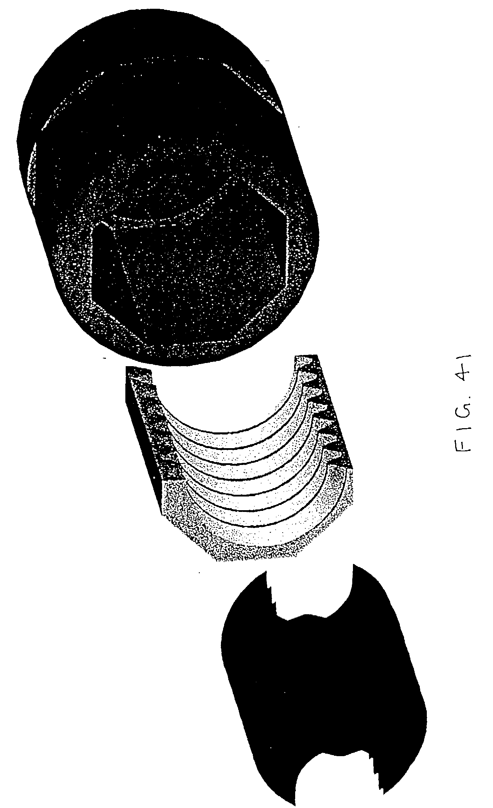

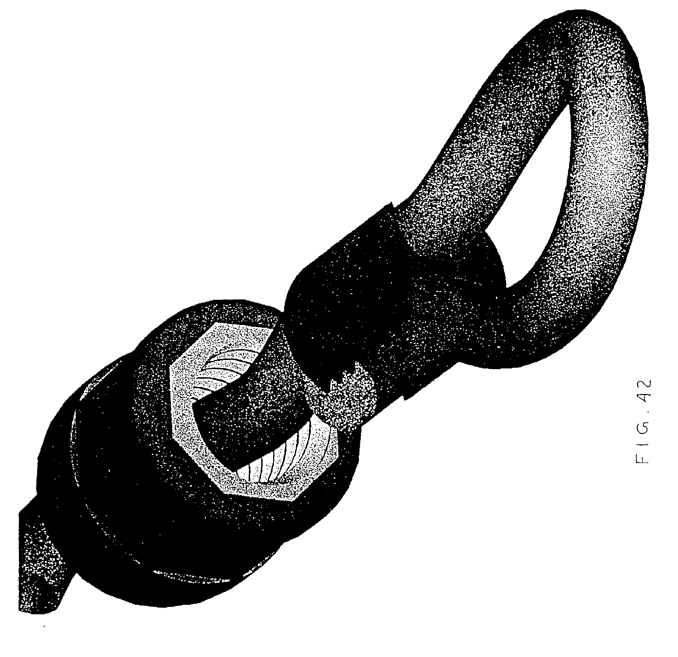

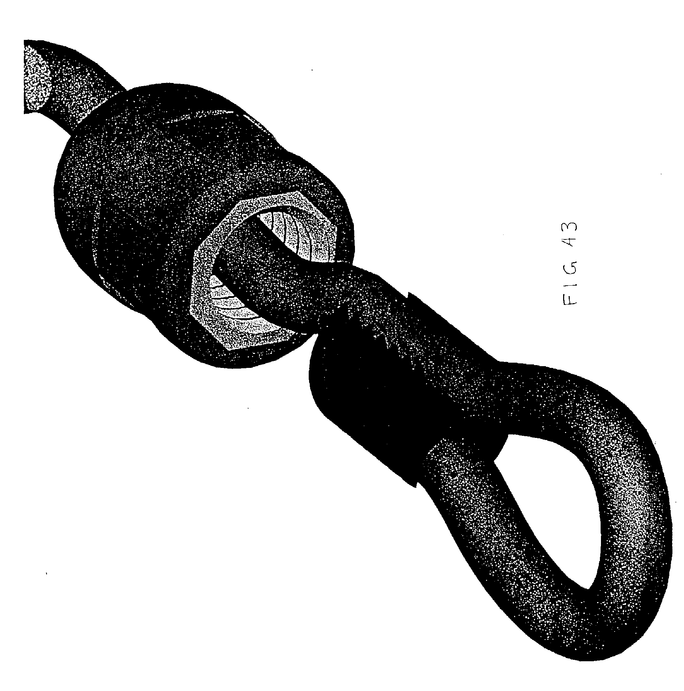

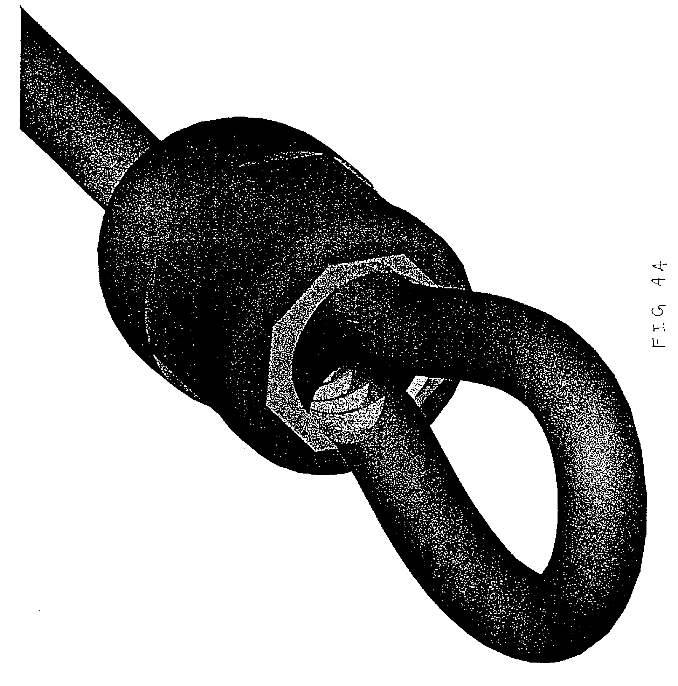

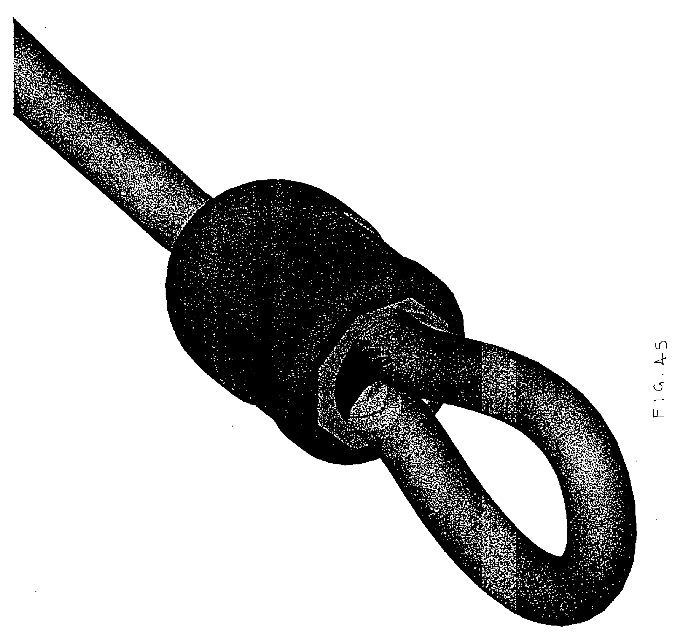

Figures 41-45 show the second embodiment in various stages of assembly. The proper assembly of the splicing nut is shown. Figure 42 shows an exploded view of the second embodiment omitting one necessary nut insert 24B for clarity. One possible assembly sequence proceeds as follows: First, the nut inserts 24A and 24B are inserted into the nut housing 21. Second, an end of a line is passed through the hole 22 in the top end of the nut housing 21 and out of the nut housing 21 through the bottom end of the nut housing 21. The line is then situated in the core 26 as shown in Figure 42 so that two regions of the line are laid in the slots 27 and a loop of the line is formed between the two slots 27. Another view is shown in Figure 43. Finally, the core 26 is threaded into the nut inserts 24A and 24B and tightened.

Tightening is accomplished by applying opposing torque to the nut housing 21 and the core 26. A torque can most easily be applied to the nut housing 21 with a wrench or similar tool positioned to grip the faces 23 on the nut housing 21. The torque can be applied to the core 26 using a tool which grips the core 26 by attaching to two holes 28 in the bottom of the core 26. For example, wire spanners, as shown in Figure 55, may be used to tighten the core 26 if the core 26 has holes 28. The embodiment of the core 26 shown in Figures 17-21 may be tightened using a common wrench. Alternatively, the line may be twisted relative to the nut housing 21, thereby twisting the core 26 with the line relative to the nut housing 21.

If the loop of the line is to be attached to another device, the line may be passed through-or around the other device before the line is looped. Additionally, the section of line that forms the loop can be protected by the use of a thimble. The thimble is inserted into the loop of line and the loop is tightened to secure the loop around the thimble before the core 26 is tightened into the nut inserts 24A and 24B.

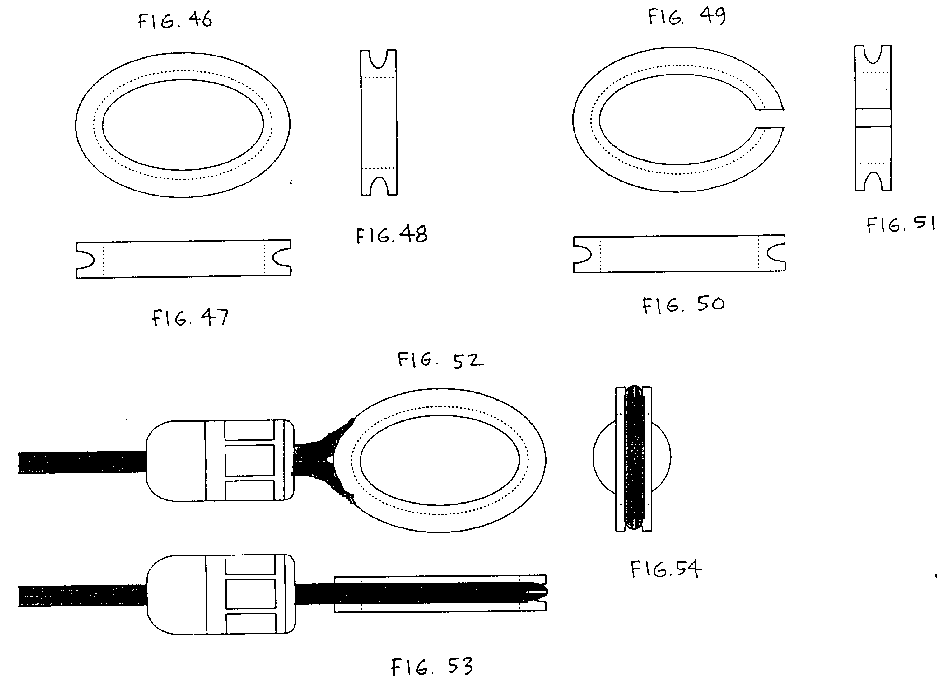

The use of the thimble is illustrated in Figures 46-54. A closed thimble is shown in Figures 46-48. Figure 46 is a plan view, and Figures 47 and 48 are elevation views orthogonal to Figure 46. Figures 49-51 illustrate an open thimble. Figure 49 is a plan view, and Figures 50 and 51 are elevation views orthogonal to Figure 49 Figure 52 is a plan view of the closed thimble, splicing nut, and line with the thimble inserted into the loop of the line. Figures 53 and 54 are elevation views orthogonal to Figure 52.

Assembly for the splicing nut of the first embodiment is accomplished in a similar manner, the primary difference being that no nut inserts 24A and 24B are used. Instead the core 2 is threaded directly into the nut 1.

The assembled splicing nut provides a lightweight, strong means of attaching the end of a line to the line to form a loop. As illustrated by the above description and the figures, the splicing nut requires little time or skill to install. Additionally, the splicing nut can easily be reused or repositioned for adjustment of line length or to prevent line wear, thus extending the life of the line.

## Claims

1. A splicing nut comprising:
a nut having an end and an aperture extending inwardly from the said end, said aperture extending to define an inner surface, and a threaded region being provided on the inner surface of the said aperture; and
a core arranged to be threaded into said nut by means of a threaded region provided on an outer surface of the core, and the core having a plurality of slots provided in the outer surface thereof and arranged for receiving a line.

2. A nut as claimed in Claim 1, wherein the depth of each of said slots is arranged to be less than the diameter of the said line, such that when said core is threaded into said nut with the said line extending along the slots a part of said line touches, and is compressed between, the inner surface of said nut and the said slots.

3. A nut as claimed in Claim 1 or 2, and arranged such that the said line is significantly compressed between an inner surface of said slot and said inner surface of said nut such that said line is prevented from being pulled from said slot.

4. A nut as claimed in Claim 1, 2 or 3, and including at least one engagement formation in each slot of said core and arranged to compress the line between said engagement formation and said inner surface of said nut.

5. A nut as claimed in any one of Claims 1 to 4, wherein the core includes one or more recesses arranged for receiving a tool for the purpose of applying a torque to said core.

6. A nut as claimed in any one of Claims 1 to 5, wherein the nut includes a plurality of flat exterior surfaces arranged for engagement with a tool for the purpose of applying a torque to said nut.

7. A nut as claimed in any one of Claims 1 to 6, further including a thimble, arranged for insertion in, and to secured by, a loop of said line, said loop being secured by said splicing nut.

8. A nut as claimed in any one of Claims 1 to 7, comprising a nut housing member and a nut insert member, the nut insert member being arranged for receipt within, and engagement with, the nut housing member and an inner surface of the nut insert member providing the said threaded region of the nut.

9. A nut as claimed in Claim 8, wherein said nut insert is comprised of one or more parts.

10. A method of securing a line comprising the steps of:
receiving first and second portions of a line in respective first and second slots provided in the surface of a core member;
screwing said core into a nut member such that the said first and second portions of the line are compressed between the respective slots and an inner surface of the nut.

11. A method as claimed in Claim 10 and further comprising:
forming a loop of said line between said first slot and said portions before screwing said core into said nut and securing said loop of said line by screwing said core into said nut.

12. A method as claimed in Claim 10 or 11, and further comprising:
applying a torque to said core through a tool which attaches to one or more holes in said core.

13. A method as claimed in Claim 10, 11 or 12, and further comprising:
applying a torque to said nut through a tool which attaches to a plurality of flat surfaces on the exterior of said nut.

14. A method as claimed in Claim 10, 11, 12 or 13, and further comprising:
inserting a thimble in a loop of said line, said loop being secured by said splicing nut.
